(19) Europäisches Patentamt
European Patent Office
Office européen des brevets

(11) Veröffentlichungsnummer : **0 385 527 B1**

(12) **EUROPÄISCHE PATENTSCHRIFT**

(45) Veröffentlichungstag der Patentschrift :
**20.10.93 Patentblatt 93/42**

(51) Int. Cl.$^5$ : **C09D 133/06,**
// (C09D133/06, 161:28)

(21) Anmeldenummer : **90200344.1**

(22) Anmeldetag : **08.02.90**

(54) **Beschichtungszusammensetzung auf Basis eines Hydroxylgruppen enthaltenden Additionspolymeren und eines Aminoplastharz- Vernetzungsmittels, enthaltend Säurekatalysatoren mit Hydroxylgruppen.**

Verbunden mit 90902251.9/0461120 (europäische Anmeldenummer/Veröffentlichungsnummer) durch Entscheidung vom 20.11.92.

(30) Priorität : **25.02.89 DE 3905915**

(43) Veröffentlichungstag der Anmeldung :
**05.09.90 Patentblatt 90/36**

(45) Bekanntmachung des Hinweises auf die Patenterteilung :
**20.10.93 Patentblatt 93/42**

(84) Benannte Vertragsstaaten :
**AT BE CH DE DK ES FR GB GR IT LI NL SE**

(56) Entgegenhaltungen :
**EP-A- 0 064 338**
**EP-A- 0 103 199**
**EP-A- 0 158 161**
**EP-A- 0 205 705**
**EP-A- 0 237 285**

(73) Patentinhaber : **BASF Lacke + Farben AG**
**Glasuritstrasse 1**
**D-48165 Münster-Hiltrup (DE)**

(72) Erfinder : **Gross, Lutz-Werner, Dr.**
**Josef Paris Strasse 6**
**D-4358 Haltern (DE)**
Erfinder : **Wieditz, Stefan, Dr.**
**Am Brockhoff 15**
**D-4400 Münster (DE)**
Erfinder : **Jung, Werner Alfons, Dr.**
**Uhrwerkerstrasse 82**
**D-4715 Ascheberg (DE)**

(74) Vertreter : **Münch, Volker, Dr. et al**
**c/o BASF Lacke + Farben AG**
**Patente/Lizenzen/Dokumentation, Postfach 61 23**
**D-48136 Münster (DE)**

**EP 0 385 527 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Beschichtungszusammensetzung enthaltend

A) 50 bis 90 Gew.-% eines oder mehrerer Hydroxylgruppen enthaltenden Additionspolymeren, hergestellt durch Copolymerisation von ethylenisch ungesättigten Monomeren, welche zum Teil Hydroxialkylester α,β-ethylenisch ungesättigter Carbonsäuren sind und

B) 10 bis 50 Gew.-% eines oder mehrerer Aminoplastharz-Vernetzungsmittels,

wobei die Summe der Gewichtsanteile von A und B 100 Gew.-% beträgt, sowie geeignete Hilfs- und Zusatzstoffe, ggf. Pigmente, ggf. Füllstoffe, organisches Lösungsmittel und einen Säurekatalysator.

Gegenstand der vorliegenden Erfindung sind außerdem Verfahren zur Herstellung dieser Beschichtungszusammensetzung sowie die Verwendung dieser Beschichtungszusammensetzung für die Autoreparaturlackierung und als Einbrennlack.

Die Vernetzung von Lackfilmen, die als Vernetzerkomponente hochveretherte Melaminharze oder andere hochveretherte Aminoplastharze und als Reaktionspartner für diese Harze hydroxylgruppenhaltige Bindemittel enthalten, hat den Nachteil, daß dieser Prozeß nur bei erhöhten Temperaturen abläuft.

Für viele Anwendungszwecke empfiehlt es sich, keine hohen Temperaturen beim Vernetzungsvorgang anzuwenden. Dies gilt insbesondere für den Bereich der Autoreparaturlackierung. Die Verwendung von Polyisocyanaten, die zu einer Erniedrigung der notwendigen Vernetzungstemperatur führt, ist nachteilig wegen der Toxizität der Polyisocyanate.

Außerdem ist es bekannt, Säurekatalysatoren für die Systeme auf der Basis Aminoplastharz und hydroxylgruppenhaltiges Bindemittel einzusetzen, um so die Einbrenntemperaturen zu senken.

Aus der EP-B-64 338 ist eine Beschichtungszusammensetzung auf der Basis von Hydroxylgruppen enthaltenden linearen Additionspolymerisaten und eines im wesentlichen vollständig alkylierten Melamin-Formaldehyd-Vernetzungsmittels bekannt, wobei als saurer Katalysator ein Gemisch aus alkylierten Arylsulfonsäuren verwendet wird. Das Gemisch enthält unterschiedlich alkylierte Arylsulfonsäuren.

Aus der EP-A-158161 sind ebenfalls säurehärtende Beschichtungszusammensetzungen bekannt, die neben Melamin-Formaldehyd-Vernetzungsmitteln als Bindemittel hydroxylgruppenhaltige verzweigte Acrylatcopolymerisate enthalten. Als Säurekatalysatoren werden bevorzugt Sulfonsäureverbindungen oder Mischungen verschiedener Katalysatoren eingesetzt. Bei Raumtemperatur schnell aushärtende Beschichtungszusammensetzungen werden erhalten, wenn als Katalysatoren die aus der EP-B-64 338 bekannten Gemische unterschiedlich alkylierter Arylsulfonsäuren eingesetzt werden, jedoch zeigen diese Beschichtungszusammensetzungen erhebliche Mängel in bezug auf die Länge der Verarbeitbarkeit der Beschichtungsmassen bei Raumtemperatur (Topfzeit). Bereits ca. 2 h nach dem Vermischen der einzelnen Komponenten der Beschichtungszusammensetzung ist die Viskosität der Systeme auf das doppelte der Anfangsviskosität gestiegen, so daß eine Verarbeitung der Beschichtungszusammensetzungen nicht mehr oder nur mit technologischen Nachteilen möglich ist. Verbesserungsbedürftig ist bei diesen Systemen auch der Glanzschleier der resultierenden Beschichtungen.

Der vorliegenden Erfindung lag somit die Aufgabe zugrunde, Beschichtungsmittel auf der Basis Hydroxylgruppen enthaltender Additionspolymerer und Aminoplastharz-Vernetzern zur Verfügung zu stellen, die bei niedrigen Temperaturen, insbesondere Raumtemperatur, schnell aushärten, dabei aber trotzdem eine möglichst lange Topfzeit (mindestens ca. 4 h) aufweisen. Außerdem sollten die resultierenden Beschichtungen einen möglichst geringen Glanzschleier aufweisen sowie gute Härte und Lösemittelbeständigkeit zeigen.

Überraschenderweise wird diese Aufgabe gelöst durch eine Beschichtungszusammensetzung, enthaltend

A) 50 bis 90 Gew.-% eines oder mehrerer Hydroxylgruppen enthaltenden Additionspolymeren, hergestellt durch Copolymerisation von ethylenisch ungesättigten Monomeren, welche zum Teil Hydroxyalkylester α,β-ethylenisch ungesättigter Cärbonsäuren sind und

B) 10 bis 50 Gew.-% eines oder mehrerer Aminoplastharz-Vernetzungsmittels,

wobei die Summe der Gewichtsanteile von A und B 100 Gew.-% beträgt, sowie geeignete Hilfs- und Zusatzstoffe, ggf. Pigmente, ggf. Füllstoffe, organisches Lösungsmittel und einen Säurekatalysator.

Diese Beschichtungszusammensetzung ist dadurch gekennzeichnet, daß als saure Katalysatoren

1.) mindestens eine Hydroxylgruppe enthaltende Bernsteinsäurediestersulfonsäuren und/oder -sulfoniumsalze verwendet werden, die den nachfolgenden Formeln (I) oder (II) entsprechen:

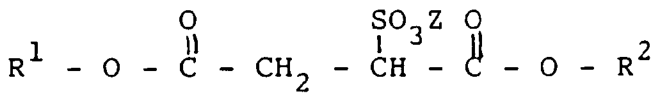 (I)

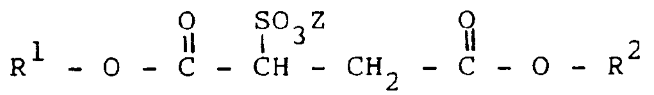 (II)

wobei bedeuten:

- $R^1$ = linearer oder verzweigter Alkyl- bzw. Alkoxyalkylrest mit 2 bis 12 C-Atomen und mit 1, 2 oder 3 Hydroxylgruppen
- $R^2$ = linearer oder verzweigter Alkyl- bzw. Alkoxyalkylrest mit 2 bis 12 C-Atomen und ggf. bis zu 3 Hydroxylgruppen
- Z = H, $NH_nR_{4-n}$ mit n = 0-4 und
- R = Alkyl, Hydroxialkyl, Aryl, Hydroxiaryl, wobei R gleich oder verschieden sein kann, oder aliphatischer oder aromatischer N-Heterocyclus

und/oder

2.) mindestens eine Hydroxylgruppe enthaltende Bernsteinsäurepolyestersulfonsäuren und/oder -sulfoniumsalze eingesetzt werden.

Gegenstand der vorliegenden Erfindung ist außerdem ein Verfahren zur Herstellung dieser Beschichtungszusammensetzungen sowie deren Verwendung als Autoreparaturlack oder als Einbrennlack.

Die als saure Katalysatoren mit Hydroxylgruppen eingesetzten Bernsteinsäureestersulfonsäuren bzw. sulfoniumsalze sowie ihre Herstellung sind bekannt und zur Herstellung von Detergentien, Netzmitteln, Emulgatoren und dgl. beschrieben (vgl. z.B. Stache, Tensid-Taschenbuch, Hanser-Verlag, München, Wien 1981; US-PS 2, 761, 795; US-PS 2, 454, 546; GB-B-652, 128). Hinweise, diese Bernsteinsäureestersulfoniumsalze bzw. -sulfonsäuren als Katalysatoren in säurehärtenden Beschichtungszusammensetzungen einzusetzen, finden sich aber nicht.

Es war überraschend und bei der Vielzahl bekannter Sulfonsäuren nicht vorhersehbar, daß gerade durch den Einsatz von Bernsteinsäurehydroxialkylestersulfonsäuren bzw. -sulfoniumsalzen als Katalysatoren Beschichtungszusammensetzungen auf der Basis verzweigter hydroxylgruppenhaltiger Additionspolymerer und Aminoplastharz-Vernetzern erhalten werden, die sich durch eine hohe Reaktivität bei niedrigen Temperaturen auszeichnen, so daß sie in der Autoreparaturlackierung einsetzbar sind, gleichzeitig bei Raumtemperatur aber eine Topfzeit von mehreren Stunden aufweisen. Vorteilhaft ist ferner, daß die resultierenden Beschichtungen einen geringen Glanzschleier bei guter Härte und Lösemittelbeständigkeit aufweisen.

Im folgenden werden nun die einzelnen Bestandteile der erfindungsgemäßen Beschichtungsmittel sowie das Verfahren zu ihrer Herstellung näher erläutert.

Geeignete Hydroxylgruppen enthaltende Additionspolymere A werden hergestellt durch Copolymerisation von Hydroxialkylestern der Acrylsäure oder Methacrylsäure mit Alkylestern der Acrylsäure bzw. Methacrylsäure und/oder anderen copolymerisierbaren Monomeren. Bevorzugt werden als OH-funktionelle Monomere 2-Hydroxiethylacrylat, 2-Hydroxiethylmethacrylat, Hydroxipropylacrylat, Hydroxipropylmethacrylat, 4-Hydroxibutylacrylat und 4-Hydroxibutylmethacrylat eingesetzt.

Als Hydroxialkylester α,β-ethylenisch ungesättigter Carbonsäuren können zum Teil Umsetzungsprodukte von Acrylsäure und/oder Methacrylsäure mit dem Glycidylester einer Carbonsäure mit einem tertiären α-Kohlenstoffatom oder von dem Glycidylester einer α,β-ethylenisch ungesättigten Carbonsäure mit einer tertiären aliphatischen Carbonsäure verwendet werden. Weiterhin können zum Teil Umsetzungsprodukte aus einem Mol Hydroxiethylacrylat und/oder Hydroxiethylmethacrylat mit durchschnittlich 2 Molen ε-Caprolacton zur Anwendung gelangen.

Als Hydroxialkylester α,β-ethylenisch ungesättigter Carbonsäuren können in einem Anteil bis zu 75 Gew.-%, vorzugsweise bis zu 50 Gew.-% bezogen auf das Gesamtgewicht der Hydroxialkylester, hydroxylgruppenhaltige Ester der Acrylsäure und/oder Methacrylsäure mit einer sekundären Hydroxylgruppe eingesetzt werden.

Weitere ethylenisch ungesättigte Monomere, die zur Herstellung der Komponente A verwendet werden können, sind Monomere mit einer Carboxylgruppe, wie z.B. Acrylsäure, Methacrylsäure, Crotonsäure,

Itakonsäure, Malein- und Fumarsäure. Des weiteren sind geeignet Alkylester der Acryl- und Methacrylsäure, wie z.B. Methylacrylat, Ethylacrylat, Propylacrylat, Butylacrylat, t-Butylacrylat, Isopropylacrylat, Isobutylacrylat, Pentylacrylat, Isoamylacrylat, Hexylacrylat, 2-Ethylhexlacrylat, Octylacrylat, 3,5,5-Trimethylhexylacrylat, Decylacrylat, Dodecylacrylat, Hexadecylacrylat, Octadecylacrylat, Octadecenylacrylat und die entsprechenden Methacrylate. Weitere geeignete polymerisierbare Monomere sind Styrol, Vinyltoluol, Alkoxiethylacrylate und Aryloxiethylacrylate sowie entsprechende Methacrylate, Ester der Malein- und Fumarsäure, Acrylnitril, Methacrylnitril, Vinylacetat, Vinylchlorid. Weitere Monomere können eingesetzt werden, sofern diese nicht zu unerwünschten Eigenschaften des Copolymerisats führen.

Besonders bevorzugt wird als Komponente A ein verzweigtes Acrylatcopolymerisat eingesetzt, welches erhältlich ist durch Copolymerisation von

$a_1$) 10 bis 60 Gew.-% hydroxylgruppenhaltigen Estern der Acrylsäure und/oder Methacrylsäure mit 2 bis 14 Kohlenstoffatomen im Alkylrest,

$a_2$) mehr als 3 bis 30 Gew.-%, bevorzugt 5 bis 25 Gew.-% ethylenisch ungesättigten Monomeren mit mindestens 2 polymerisierbaren Doppelbindungen und

$a_3$) 15 bis 82 Gew.-% weiteren polymerisierbaren Monomeren mit einer olefinisch ungesättigten Doppelbindung,

wobei die Summe der Gewichtsanteile von $a_1$, $a_2$ und $a_3$ 100 Gew.-% beträgt. Derartige Copolymerisate sowie deren Herstellung sind beschrieben in der EP-A-158 161.

Die Hydroxylzahlen der Komponente A liegen vorzugsweise im Bereich von etwas 70 bis 200 mg KOH/g.

Beispiele für als Komponente $a_1$ und $a_3$ geeignete Monomere sind die bereits auf den Seiten 6 und 7 dieser Beschreibung genannten Monomeren.

Als Komponente $a_2$ können vorteilhaft Verbindungen der allgemeinen Formel

$$CH_2 = \overset{R}{\overset{|}{C}} - \overset{O}{\overset{\|}{C}} - X - (CH_2)_n - X - \overset{O}{\overset{\|}{C}} - \overset{R}{\overset{|}{C}} = CH_2$$

R = H oder $CH_3$
X = O, N, S
n = 2 bis 8

verwendet werden.

Beispiele für derartige Verbindungen sind Hexandioldiacrylat, Hexandioldimethacrylat, Glykoldiacrylat, Glykoldimethacrylat, Butandioldiacrylat, Butandioldimethacrylat und ähnliche Verbindungen.

Weiterhin kann die Komponente $a_2$ vorteilhaft ein Umsetzungsprodukt aus einer Carbonsäure mit einer polymerisierbaren, olefinisch ungesättigten Doppelbindung und Glycidylacrylat und/oder Glycidylmethacrylat oder eine mit einem ungesättigten Alkohol veresterte Polycarbonsäure oder ungesättigte Monocarbonsäure sein. Ferner sind auch Polyvinylverbindungen wie z.B. Divinylbenzol geeignet. Ferner kann vorteilhaft als Komponente $a_2$ ein Umsetzungsprodukt eines Polyisocyanats und eines ungesättigten Alkohols oder Amins verwendet werden. Als Beispiel hierfür sei das Reaktionsprodukt aus einem Mol Hexamethylendiisocyanat und 2 Mol Allylakohol genannt.

Eine weitere vorteilhafte Komponente $a_2$ ist ein Diester von Polyethylenglykol und/oder Polypropylenglykol mit einem mittleren Molekulargewicht von weniger als 1500, vorzugsweise von weniger als 1000, und Acrylsäure und/oder Methacrylsäure. Erfingungsgemäß können als Komponente $a_2$ auch Acrylate mit mehr als 2 ethylenisch ungesättigten Doppelbindungen eingesetzt werden, wie beispielsweise Trimethylolpropantriacrylat oder Trimethylolpropantrimethacrylat. Selbstverständlich können auch Kombinationen dieser mehrfach ungesättigten Monomeren verwendet werden.

Geeignete Aminoplastharze (Komponente B) sind bekannte Harnstoff-, Carbamid-, Melamin-, Benzoguanamin- und Glycolurilharze. Letztere sind z.B. unter dem Warennamen Cymel 1171 (Cyanamid) auf dem Markt erhältlich.

Bevorzugt werden als Vernetzerkomponente B Aminoharze vom Melamintyp in den erfindungsgemäßen Beschichtungszusammensetzungen eingesetzt. Die verwendeten Melamin-Formaldehyd-Vernetzungsmittel haben einen mittleren Methylolierungsgrad von mindestens 0,65, bevorzugt 0,9 bis 1,0, und werden mit Monoalkoholen in einem Umfang von mindestens 80 Mol.-%, bevorzugt 90 bis 100 Mol.-%, bezogen auf die maximal mögliche Veretherung, verethert. Als geeignete Veretherungsalkohole sind Methanol, Ethanol, Propanol, iso-Propanol, n-Butanol, iso-Butanol, tert.-Butanol, Hexanole, Heptanole und Ethylhexanol zu nennen. Besonders bevorzugt wird Hexamethoxymethylmelamin, welches unter dem Warenzeichen Cymel 301 (Cyanamid) auf dem Markt erhältlich ist, eingesetzt.

Die in den erfindungsgemäßen Beschichtungszusammensetzungen als saure Katalysatoren eingesetzten hydroxifunktionellen Bernsteinsäurediestersulfonsäuren und Bernsteinsäurepolyestersulfonsäuren bzw. die jeweiligen Sulfoniumsalze sind bekannt (vgl. z.B. US-PS 2, 761, 795; US-PS 2, 454, 546; GB-PS 652, 128 und Stache, Tensid-Taschenbuch, Hanser-Verlag, München, Wien 1981) und mittels unterschiedlicher Verfahren herstellbar: Beispielsweise sind diese Sulfonsäuren durch Sulfonierung mittels gasförmigem Schwefeldioxid von $\alpha,\beta$-ungesättigten Dicarbonsäuren und Veresterung der resultierenden Sulfobernsteinsäure zugänglich, wie dies in der DE-OS 1803 881 beschrieben ist.

Besonders einfach und ohne großen apparativen Aufwand herstellbar sind als saure Katalysatoren geeignete hydroxifunktionelle Bernsteinsäureestersulfonsäuren bzw. -sulfoniumsalze nach folgendem Verfahren:

Zunächst wird Maleinsäureanhydrid mit einer Alkoholkomponente im Molverhältnis 1 mol Anhydrid : 1 mol Polyol bei Temperaturen zwischen 70 und 100 °C in Gegenwart eines üblichen Veresterungskatalysators solange umgesetzt, bis sich der Monoester vollständig gebildet hat (Überprüfung über Bestimmung der Säurezahl). Danach wird weiteres Polyol im Molverhältnis 1 Mol Polyol : 1 Mol Monoester zusammen mit organischem Lösungsmittel und weiterem Veresterungskatalysator zugegeben und die Reaktionsmischung langsam (d.h. mit einer Aufheizrate von ca. 2 °C/min) auf Temperaturen zwischen 130 und 230 °C aufgeheizt. Das entstehende Reaktionswasser wird laufend destillativ aus der Reaktionsmischung entfernt und die Veresterungsreaktion solange fortgeführt, bis eine Säurezahl des Reaktionsproduktes von unter 5 mg KOH/g, bevorzugt unter 3 mg KOH/g erreicht ist. Nun wird, ggf. unter leichtem Unterdruck, das Lösungsmittel abdestilliert.

Der so erhaltene Maleinsäureester wird nun bei Temperaturen, die im allgemeinen zwischen 80 und 110 °C liegen, mit einer wäßrigen Hydrogensulfitlösung im Molverhältnis zwischen 1:0,9 und 1:1,1 umgesetzt. Die Sulfonierungsreaktion wird dabei bis zu einem Sulfonierungsgrad des Maleinsäureesters von 50 bis 100 %, bevorzugt 80 bis 100 %, fortgeführt. Gegebenenfalls kann die Sulfonierungsreaktion allerdings auch nur bis zu geringeren Sulfonierungsgraden von kleiner als 50 % durchgeführt werden. In diesem Fall ist die Menge an in den Beschichtungszusammensetzungen eingesetztem Säurekatalysator entsprechend zu erhöhen. Danach wird das überschüssige Schwefeldioxid entfernt, z.B. indem ein Stickstoffstrom durch die Lösung geleitet wird. Hydrogensulfitreste werden durch Oxidation, beispielsweise durch Zugabe von wäßriger Wasserstoffperoxidlösung, entfernt. Dann wird Lösungsmittel zugesetzt und das in der Reaktionsmischung enthaltene Wasser azeotrop abdestilliert. Um die Sulfonsäure freizusetzen, wird angesäuert, beispielsweise mit Schwefelsäure.

Für die Herstellung der sauren Katalysatoren geeignete Alkoholkomponenten sind lineare oder verzweigte Polyole mit 2 bis 4 Hydroxylgruppen und 2 bis 12 C-Atomen im Molekül. Sie können auch im Gemisch mit Monoalkoholen eingesetzt werden. Beispiele für geeignete Alkohole sind Ethylenglykol, Propylenglykol, Butylenglykol, Hexamethylen-1,6-diol, Neopentylglykol, Pentandiol, 2-Methylpentandiol, 2-Ethylbutandiol, Dimethylolcyclohexandiol, Glycerin, Timethylolethan, Trimethylolpropan, Trimethylolbutan, Pentaerythrit, Ditrimethylolpropan, sowie Monoalkohole wie z.B. Ethanol, Propanol, Butanol etc. Geeignet sind außerdem auch Etheralkohole, beispielsweise Diethylenglykol und Triethylenglykol. Bevorzugt eingesetzt werden Trimethylolpropan, Propylenglykol und Neopentylglykol.

Die sauren Katalysatoren können sowohl als freie Sulfonsäuren oder auch in Form ihrer Amin- bzw. Ammoniumsalze eingesetzt werden. Die Sulfoniumsalze entsprechen der allgemeinen Formel $R - SO_3Z$, wobei R den Bernsteinsäureesterrest darstellt. Der Rest Z kann z.B. H oder N $H_nR^14$-n (n = 0-4) bedeuten, wobei $R^1$ gleiche oder verschiedene Alkyl-, Hydroxialkyl-, Aryl- oder Hydroxiarylreste bedeuten kann.

R kann beispielsweise bedeuten: Methyl, Ethyl, Propyl, i-Propyl, n-Butyl, t-Butyl, i-Butyl, Pentyl, iso-Amyl, Hexyl, Hydroxiethyl, Hydroxipropyl, Hydroxibutyl, Hydroxihexyl, Phenyl, Toluyl, Naphthyl, Hydroxyphenyl.

Z kann auch ein aliphatischer oder aromatischer N-Heterocyclus sein, der sich beispielsweise ableitet von Pyridin, Oxazolidin, Hydropyridin, Morpholin, Pyrrol, Imidazol, Picolin und Piperidin.

Je nach Anwendungsbereich werden die hydroxifunktionellen Sulfonsäurekatalysatoren in einem Anteil von 0,1 bis 10, bevorzugt 0,1 bis 5 Gew.-%, bezogen auf den Bindemittelfestkörper, verwendet. Unter Bindemittelfestkörper ist definitionsgemäß die Summe der Festkörper der Komponenten A und B zu verstehen. Ist es erwünscht, daß das Beschichtungsmittel bei niedriger Temperatur, also etwa bei Raumtemperatur, aushärtet, wird der saure Katalysator in einem Anteil von mehr als 1 bis 10 Gew.-%, bevorzugt 2 bis 5 Gew.-%, bezogen auf den Bindemittelfestkörper eingesetzt. In diesem Fall werden außerdem die Sulfonsäurekatalysatoren bevorzugt in Form ihrer freien Säuren eingesetzt. Wird die Beschichtungszusammensetzung als Einbrennlack verwendet, ist ein Anteil von 0,1 bis 2 Gew.-%, bevorzugt 0,1 bis 1 Gew.-% bezogen auf den Bindemittelfestkörper, durchaus ausreichend.

Die obengenannten hydroxifunktionellen Katalysatoren können auch zusammen mit nicht-hydroxifunktionellen organischen Sulfonsäuren in den erfindungsgemäßen Beschichtungsmitteln eingesetzt werden. Dabei ist darauf zu achten, daß der Anteil der nicht-hydroxifunktionellen organischen Sulfonsäuren

nicht mehr als 50 Gew.-%, bezogen auf das Gesamtgewicht der verwendeten Katalysatoren, beträgt. Als geeignete nicht-hydroxifunktionelle Sulfonsäuren sind para-Toluolsulfonsäure, Xylolsulfonsäuren, Ethylbenzolsulfonsäuren, Methylnaphthalinsulfonsäuren, p-Octylbenzolsulfonsäure, p-Dodecylbenzolsulfonsäure, verzweigtkettige $C_{13}$-Alkylbenzolsulfonsäure und Di-($C_9$-Alkyl-)naphthalindisulfonsäure zu nennen.

Die erfindungsgemäßen Beschichtungszusammensetzungen enthalten außerdem organische Lösungsmittel, gegebenenfalls Pigmente, Füllstoffe sowie geeignete Hilfs- und Zusatzmittel in den üblichen Mengen.

Als organische Lösungsmittel, die bevorzugt in einer Menge von 30 bis 90 Gew.-%, bezogen auf die Gesamtzusammensetzung der Beschichtungszusammensetzung, eingesetzt werden, kommen aliphatische, cycloaliphatische und aromatische Kohlenwasserstoffe, Ester, Ether und Ketone in Frage. Beispielhaft seien verschiedene Testbenzine, Tetralin, Dekalin Solvent Naphtha®, Schwerbenzol, verschiedene Solvesso® -Typen, verschiedene Shellsol® -Typen und Deasol®, Dioxan, Ethylenglykoldibutylether, Ethylenglykoldiethylether, Diethylenglykoldimethylether, Dibutylether, Cyclohexanon, Methylethylketon, Aceton, Isophoron, Methyln-butylketon, Methylisobutylketon, Methyl-n-amylketon, Diethylketon, Ethylbutylketon, Diisopropylketon, Diisobutylketon, Acetylaceton, Methylacetat, Ethylacetat, Propylacetat, Butylacetat, Amylacetat, Methylglykolacetat und Ethylglykolacetat genannt.

Beispiele für übliche Hilfs- und Zusatzstoffe, die bevorzugt in Mengen von 0 bis 10 Gew.-%, bezogen auf die Gesamtzusammensetzung der Beschichtungszusammensetzung, eingesetzt werden, sind Verlaufsmittel, Silikonöle, Weichmacher wie Phosphorsäureester und Phthalsäureester, viskositätskontrollierende Zusätze, Mattierungsmittel, UV-Absorber und Lichtschutzmittel.

Beispiele für gegebenenfalls zugesetzte Pigmente sind Metallpigmente, wie z.B. Aluminiumplättchenpigmente und mit Metalloxiden beschichtete Glimmerplättchen (z.B. Mica) als Effektpigmente, die bevorzugt in Mengen von 0 bis 20 Gew.-%, bezogen auf die Gesamtzusammensetzung, eingesetzt werden. Es können auch ggf. Farbpigmente, ggf. auch in Kombination mit den Effekt- bzw. Metallpigmenten, bevorzugt in Mengen von 0 bis 40 Gew.-%, bezogen auf die Gesamtzusammensetzung der Beschichtungszusammensetzung, eingesetzt werden. Beispiele hierfür sind anorganische und organische Pigmente, wie z.B. verschiedene Eisenoxid-Typen, Titandioxid, Graphit, Ruß, Zink, Strontium-, Barium- und Bleichromat, Bleicyanamid, Bleisilicochromat, Zinkoxid, Cadmiumsulfid, Chromoxid, Zinksulfid, Nickeltitangelb, Chromtitangelb, Ultramarinblau, Phthalocyaninkomplexe, Naphtholrot, Chinaridone, halogenierte Thioindigo-Pigmente oder dergleichen.

Geeignete Füllstoffe sind z.B. Talkum, Glimmer, Kaolin, Kreide, Quarzmehl, Asbestmehl, Schiefermehl, Bariumsulfat, verschiedene Kieselsäuren, Silikate, Glasfasern, organische Fasern und dergleichen. Sie werden bevorzugt in Mengen von 0 bis 50 Gew.-%, bezogen auf die Gesamtzusammensetzung der Beschichtungszusammensetzung, eingesetzt.

Die erfindungsgemäßen Beschichtungszusammensetzungen werden als Zwei- und Dreikomponentensysteme, bevorzugt aber als Dreikomponentensysteme formuliert. Insbesondere wenn als Säurekalatysatoren die Ammoniumsalze der hydroxifunktionellen Sulfonsäuren eingesetzt werden, können Ein- oder Zweikomponentensysteme aus den erfindungsgemäßen Beschichtungsmitteln hergestellt werden. In diesem Fall werden die Sulfonsäuren erst bei Anwendung erhöhter Temperaturen freigesetzt.

Die Lackkomponente I enthält dabei das hydroxylgruppenhaltige Additionspolymer A, die Lackkomponente II das Aminoplastharz und die Lackkomponente III den sauren Härtungskatalysator.

Die Lackkomponenten I, II und III werden im Falle der Dreikomponentensysteme kurz vor der Applikation der Beschichtungszusammensetzung gemischt. Die Dauer der Verarbeitbarkeit ("Topfzeit") des Gemisches liegt im allgemeinen über 5 h, während die Lackkomponenten I, II und III getrennt mehrere Monate stabil sind.

Die Herstellung der Lackkomponenten I, II bzw. III erfolgt in üblicher Weise durch Vermischen der jeweils enthaltenen Komponenten. Mitunter ist es angezeigt, eine Komponente, falls. sie nicht in flüssiger Form anliegt, zunächst in einem Lösungsmittel zu lösen und die Lösung mit den übrigen Komponenten zu vermischen.

Enthält die Beschichtungszusammensetzung Pigmente, so werden sie bevorzugt in die Lackkomponente I, die das hydroxylgruppenhaltige Additionspolymer enthält, eingearbeitet. Dies kann beispielsweise durch Anmahlen der Pigmente mit dem Bindemittel bzw. Additionspolymer oder durch Einarbeitung einer Pigmentpaste erfolgen.

Die erfindungsgemäßen Beschichtungszusammensetzungen härten aus im Temperaturbereich von Raumtemperatur bis etwa 100 °C, können aber auch bei höheren Temperaturen eingesetzt werden.

Durch die niedrigen Aushärtungstemperaturen sind sie insbesondere geeignet für die Autoreparaturlackierung.

Sie können allerdings auch als Klarlack, Füller oder Decklack sowie als Metallpigmente enthaltender Basislack oder als Klarlack einer Mehrschicht-Metallic-Lackierung verwendet werden.

Diese Beschichtungsmittel können durch Spritzen, Fluten, Tauchen, Walzen, Rakeln oder Streichen auf ein Substrat in Form eines Films aufgebracht werden, wobei der Film anschließend zu einem festhaftenden Überzug gehärtet wird.

Die erfindungsgemäßen Beschichtungszusammensetzungen zeichnen sich insbesondere durch eine hohe Reaktivität bei gleichzeitiger Topfzeit von mehreren Stunden aus. Die resultierenden Beschichtungen weisen einen geringen Glanzschleier bei guter Härte und Lösemittelbeständigkeit auf.

Im folgenden wird die Erfindung anhand von Ausführungsbeispielen näher erläutert. Alle Angaben über Teile und Prozentsätze sind Gewichtsangaben, falls nicht ausdrücklich etwas anderes festgestellt wird.

## I. Herstellung der hydroxifunktionellen Katalysatoren

### I.1. Herstellung einer hydroxifunktionellen Bernsteinsäureestersulfonsäure 1

In einem Doppelwandkessel aus Stahl mit Ölthermostat, Rührer, Thermoelement und Rückflußkühler mit Wasserabscheider werden unter Stickstoff 733 g Maleinsäureanhydrid, 778 g Neopentylglykol und 2,3 g Dibutylzinnoxid auf 80 °C aufgeheizt. Nachdem eine Säurezahl von 290 erreicht ist, werden 778 g Neopentylglykol, 293 g Toluol und 3 g p-Benzochinon zugegeben und langsam bis auf 171 °C aufgeheizt. Das entstehende Wasser wird destillativ aus dem Gleichgewicht entfernt. Nachdem eine Säurezahl von 1,6 erreicht ist, wird unter leichtem Unterdruck das Toluol abdestilliert.

750 g des so hergestellten Maleinsäureesters A werden in einer mit Heizmantel, Rührer, Tropftrichter und Rückflußkühler ausgestatteten Glasbecherapparatur auf 100 °C aufgeheizt und dann werden 438 g einer 50 %igen wäßrigen Ammoniumhydrogensulfitlösung innerhalb 1 h zugetropft. Anschließend wird 6 h auf Temperatur gehalten. Danach wird 30 min ein Stickstoffstrom zur Entfernung von überschüssigem Schwefeldioxid durch die Lösung geleitet. Zur Oxidation von Ammoniumhydrogensulfitresten werden bei 70 °C 35 ml 30 %ige Wasserstoffperoxidlösung zugegeben. Dann werden 300 g n-Butanol zugegeben und das enthaltene Wasser azeotrop bei 107 °C, gegen Ende unter gelindem Unterdruck abdestilliert. Man erhält ein Zwischenprodukt 1A.

Um die Säure freizusetzen werden 780 g n-Butanol vorgelegt und unter Eiskühlung bei 0 °C langsam 102,3 g 98 %ige Schwefelsäure zugetropft. Zu dieser eiskalten butanolischen Schwefelsäure werden 1.349 g des oben erhaltenen Zwischenproduktes 1A unter Rühren innerhalb 6 h zugetropft. Dabei wird die Reaktionstemperatur unter 10 °C gehalten. Das ausgefallene Ammoniumsulfat wird abfiltriert. Man erhält eine gelborange gefärbte Lösung der Sulfonsäure 1 mit einem Gehalt von 33 %.

### I.2. Herstellung einer hydroxifunktionellen Bernsteinsäureestersulfonsäure 2

In der bei der Herstellung des Polyesters A beschriebenen Apparatur werden 980 g Maleinsäureanhydrid, 760 g Propylenglykol und 2 g Dibutylzinnoxid bei maximal 80 °C bis zur Säurezahl 316 umgesetzt. Anschließend werden 760 g Propylenglykol, 125 g Toluol und 2,5 g p-Benzochinon zugegeben und bei 144 °C solange am Wasserabscheider gekocht, bis eine Säurezahl von 2 erreicht ist. Anschließend wird das Lösemittel abdestilliert und so der Polyester B erhalten.

In der bei der Herstellung der Sulfonsäure 1 beschriebenen Apparatur werden analog zu 1 750 g Polyester B auf 100 °C aufgeheizt, 557 g einer 50 %igen wäßrigen Ammoniumhydrogensulfitlösung innerhalb 1 h zugetropft und dann 6 h die Temperatur von 100 °C gehalten. Danach wird 30 min ein $N_2$-Strom zur Entfernung von überschüssigem Schwefeldioxid durch die Lösung geleitet. Dann werden bei 70 °C 45 ml 30 %ige Wasserstoffperoxidlösung und anschließend 300 g n-Butanol zugegeben und analog zu 1 das Reaktionswasser azeotrop abdestilliert. Man erhält ein Zwischenprodukt 2A.

Um die Säure freizusetzen, werden 1.456 g n-Butanol vorgelegt und unter Eiskühlung bei 0 °C langsam 137,6 g 98 %ige Schwefelsäure zugetropft. Zu dieser Lösung werden unter Rühren innerhalb von 6 h 1.000 g des Zwischenproduktes 2A bei einer Temperatur von weniger als 10 °C zugetropft. Das ausgefallene Ammoniumsulfat wird abfiltriert. Man erhält eine Lösung der Sulfonsäure 2 mit einem Säuregehalt von 26 %.

### I.3. Herstellung einer hydroxifunktionellen Bernsteinsäureestersulfonsäure 3

In der bei der Herstellung des Polyesters A beschriebenen Apparatur werden 784 g Maleinsäureanhydrid, 1.072 g Trimethylolpropan und 1,84 g Dibutylzinnoxid bei 80 °C bis zu einer Säurezahl von 219 umgesetzt. Anschließend werden 1.072 g Trimethylolpropan, 146,4 g Toluol und 2.96 g p-Benzochinon zugegeben und bei 200 °C solange am Wasserabscheider gekocht, bis eine Säurezahl von 1.3 erreicht ist. Anschließend wird das Lösemittel abdestilliert und so der Polyester C erhalten.

Analog zur Herstellung der Sulfonsäure 1 wird die Sulfonsäure 3, allerdings unter Verwendung folgender Mengen der einzelnen Reagentien, hergestellt:

Für die Herstellung des Zwischenproduktes 3A:

750 g Polyester C

419 g 50 %ige wäßrige Ammoniumhydrogensulfitlösung
34 ml 30 %ige Wasserstoffperoxidlösung
300 g n-Butanol

Für die Herstellung der Sulfonsäure 3:

1.170 g n-Butanol
76,5 g 98 %ige Schwefelsäure
800 g Zwischenprodukt 3A

Es resultiert eine Lösung der Sulfonsäure 3 mit einem Säuregehalt von 30 %.

I.4. Herstellung von verschiedenen Katalysatorlösungen

Unter Verwendung oben beschriebenen Sulfonsäuren 1-3 sowie unter Verwendung eines Gemisches aus technischer p-Toluolsulfonsäure und technischer Dodecylbenzolsulfonsäure als Vergleichskatalysator werden verschiedene Katalysatorlösungen hergestellt, deren Zusammensetzung in Tabelle 1 dargestellt ist.

**Tabelle 1: Zusammensetzung der Katalysatorlösungen**

| Säurelösung | 1 | 2 | 3 | 4 |
|---|---|---|---|---|
| p-TSA [1] | - | - | - | 14,0 |
| DBSA [2] | - | - | - | 6,0 |
| Sulfonsäure 1 | 33,5 | - | - | - |
| Sulfonsäure 2 | - | 26,0 | - | - |
| Sulfonsäure 3 | - | - | 30,7 | - |
| Butanol | 66,5 | 74,0 | 69,3 | 56,0 |
| Isopropanol | - | - | - | 24,0 |

[1] p-TSA = para-Toluolsulfonsäure (technisch)
[2] Dodecylbenzolsulfonsäure (technisch)

**II. Herstellung eines hydroxylgruppenhaltigen Acrylatharzes I**

In einem 4-1-Edelstahlkessel werden vorgelegt und auf 110 °C aufgezeizt:

757,5 Teile Butylacetat
402,6 Teile 1-Methoxipropylacetat-2

In den Monomerenbehälter werden eingewogen und gemischt:

210 Teile Methylmethacrylat
141 Teile 2-Hydroxiethylmethacrylat
210 Teile Styrol
141 Teile n-Butylacrylat
349,5 Teile 1,4-Butandiolmonoacrylat
210 Teile Hexandioldiacrylat
138 Teile 2-Ethylhexylacrylat
63 Teile 2-Mercaptoethanol

In den Initiatortank werden eingewogen und gemischt:

47,4 Teile 2,2-Azobis-(2-Methylbutannitril)
234,6 Teile Butylacetat
94,4 Teile 1-Methoxipropylacetat-2

Der Inhalt des Monomerentanks wird in 3 h zudosiert, der Inhalt des Initiatortanks wird in 3,5 h zudosiert. Die Zuläufe werden gleichzeitig gestartet. Während der Polymerisation wird die Temperatur bei 110 °C gehalten. Nach Zulaufende wird noch für 3 h nachpolymerisiert.

Die so erhaltene Acrylatharzlösung I hat eine Viskosität von 1,8 dPa.s und einen Festkörper von 50 % ( 130°C, 60 min).

### III. Herstellung von Pigmentpasten

Die in Tabelle 2 angegebenen Komponenten werden in einer Laborsandmühle auf eine Hegman-Feinheit kleiner 10 µm gemahlen.

Tabelle 2: Zusammensetzung der Pigmentpasten

| Pigmentpaste | grün | rot |
|---|---|---|
| Acrylatharz I | 63,30 | 61,16 |
| Pigment Grün 7 der BASF AG | 4,0 | - |
| Pigment Yellow 151 der Hoechst | 1,0 | - |
| Pigment White 6 der Tioxide | 4,0 | - |
| Pigment Red 122 der Hoechst | - | 4,0 |
| Pigment Red 104 der BASF AG | - | 8,0 |
| Butylacetat | 10,00 | 10,00 |
| Methoxipropylacetat | 13,70 | 16,84 |
| Bindemittelfestkörper | 44,0 | 40,0 |
| Pigment | 9,0 | 12,0 |

### Beispiele 1-6

Unter Verwendung der grünen bzw. roten Pigmentpaste wird aus den in Tabelle 3 angegebenen Komponenten in bekannter Weise durch Mischen ein grüner bzw. roter Decklack hergestellt, der mit der in Tabelle 4 angegebenen Menge verschiedener Säurelösungen 1-3 unter Rühren versetzt wird.

Die erhaltene Beschichtungszusammensetzung wird nun sofort auf Glastafeln aufgerakelt und folgendermaßen getrocknet:

#### Probe 1:

Nach 30minütigem Einbrennen bei 60 °C werden die beschichteten Glastafeln noch 24 h bzw. 6 Tage bei Raumtemperatur aufbewahrt und danach die Pendelhärte nach König bestimmt. Die Ergebnisse dieser Prüfung sind in Tabelle 5 dargestellt.

#### Probe 2:

Die Glastafeln werden nach der Applikation der Beschichtungszusammensetzung 6 Tage bei Raumtemperatur aufbewahrt und danach die Pendelhärte nach König bestimmt. Die Ergebnisse dieser Prüfungen sind in Tabelle 5 dargestellt.

Außerdem wurde von den erhaltenen Beschichtungszusammensetzungen jeweils die Topfzeit bestimmt, unter der die Zeit verstanden wird, in der die Viskosität der Beschichtungszusammensetzungen auf das Doppelte der Anfangsviskosität gestiegen ist.

Außerdem wird die erhaltene Beschichtungszusammensetzung noch auf Stahlbleche appliziert, die mit einem handelsüblichen Füller auf Basis eines Polyaminoamids einer Dimerfettsäure und eines Epoxidharzes auf Basis Bisphenol A mit Epoxidäquivalentgewicht von 450-500 beschichtet sind. Diese Bleche werden 30 min bei 60 °C getrocknet und der Glanz nach Belastung von 240 h im Schwitzwasserkonstantklima nach DIN 50017 untersucht. Außerdem wurde die Lösemittelbeständigkeit von den jeweils resultierenden Beschichtungen untersucht, indem die Beschichtungszusammensetzung auf Glastafeln gespritzt und anschließend durch 7-tägige Lagerung bei Raumtemperatur gehärtet wurde. Die Ergebnisse dieser Prüfungen sind in Tabelle 6 dargestellt. Der Glanzschleier der Beschichtungen wurde untersucht, indem die Beschichtungszusammensetzungen auf Glastafeln gespritzt und 30 min bis 60 °C getrocknet wurden. Die Ergebnisse dieser Prüfungen sind ebenfalls in Tabelle 6 dargestellt.

Vergleichsbeispiel 1 und 2

Analog Beispiel 1 bzw. 4 wird unter Verwendung des grünen bzw. roten Decklackes durch Versetzen mit der Säurelösung 4 eine grüne bzw. rote Beschichtungszusammensetzung hergestellt (vgl. Tabellen 3 und 4), die analog zu den Beispielen 1 bis 6 auf Glasplatten und auf mit einem Füller beschichtete Stahlbleche appliziert wird. Die Härtung der Filme sowie die Prüfung der resultierenden Beschichtungen erfolgt analog zu den Beispielen 1-6. Die Ergebnisse der Untersuchungen zeigen Tabellen 5 und 6.

**Tabelle 3: Zusammensetzung des grünen bzw. roten Decklackes**

| Decklack | grün | rot |
|---|---|---|
| Acrylatharz I | 3,20 | - |
| Pigmentpaste grün | 67,00 | - |
| Pigmentpaste rot | - | 70,00 |
| HMMM-Harz [1)] | 10,70 | 9,52 |
| Butanol | 14,60 | 15,00 |
| Tetralin | 3,00 | 3,00 |
| Siliconöl (5 %) | 1,50 | 1,50 |
| Methoxipropylacetat | - | 0,98 |

1) Hexamethoxymethylmelaminharz Cymel(R) 301, Handelsprodukt der Cyanamid.

Tabelle 4: Zusammensetzung der Beschichtungszusammensetzungen

| Beispiel | 1 | 2 | 3 | V1 | 4 | 5 | 6 | V2 |
|---|---|---|---|---|---|---|---|---|
| Decklack grün | 100 | 100 | 100 | 100 | - | - | - | - |
| Decklack rot | - | - | - | - | 100 | 100 | 100 | 100 |
| Säurelösung 1 | 4,40 | - | - | - | 3,90 | - | - | - |
| Säurelösung 2 | - | 5,66 | - | - | - | 5,02 | - | - |
| Säurelösung 3 | - | - | 4,80 | - | - | - | 4,25 | - |
| Säurelösung 4 | - | - | - | 6,30 | - | - | - | 5,60 |

**Tabelle 5: Prüfergebnisse von Glasaufzügen der Beschichtungszusammensetzungen**

| Beispiel | 1 | 2 | 3 | V1 | 4 | 5 | 6 | V2 |
|---|---|---|---|---|---|---|---|---|
| Schichtdicke (naß) (µm) | 25 | 25 | 25 | 25 | 25 | 25 | 25 | 25 |
| Topfzeit (h) | > 5 | > 5 | > 5 | 1,5 | > 5 | > 5 | > 5 | 2,0 |
| Pendelhärte (König) in s nach Einbrennen (30 min/60 °C) und Lagerung bei RT von | | | | | | | | |
| 1 Tag | 62 | 46 | 36 | 48 | 53 | 64 | 34 | 53 |
| 6 Tagen | 90 | 66 | 94 | 62 | 118 | 69 | 88 | 69 |
| Pendelhärte (König) in s nach Lagerung von 6 Tagen bei Raumtemperatur (RT) | 70 | 63 | 64 | 62 | 87 | 80 | 62 | 76 |

**Tabelle 6: Prüfergebnisse**

| Beispiel | 1 | 2 | 3 | V1 | 4 | 5 | 6 | V2 |
|---|---|---|---|---|---|---|---|---|
| Schichtdicke (naß) ($\mu$m) (Blech) | 50 | 50 | 50 | 50 | 50 | 50 | 50 | 50 |
| Glanzschleiermaßzahl [1)] | 0,64 | 0,48 | 0,49 | 0,78 | 0,87 | 0,71 | 0,69 | 1,26 |
| Glanz (20 °) in % | 79,0 | 82,0 | 82,0 | 80,0 | 77,0 | 78,0 | 80,0 | 74,0 |
| Glanz (20 °) in % nach SKK [2)] | 76,0 | 72,0 | 74,0 | 73,0 | 75,0 | 74,0 | 70,0 | 72,0 |
| Lösemittelbeständigkeit [3)] nach Lagerung von 7 Tagen bei RT | | | | | | | | |
| Xylol | 2/0-1 | 0/0 | 2/0-1 | 1/0 | 2/0 | 0-1/0 | 2/0-1 | 2/0 |
| FAM | 2/0-1 | 0-1/0 | 2/0-1 | 1-2/0 | 2/0 | 2/0 | 2/0-1 | 2/0 |

Erläuterungen zu Tabelle 6:

1) Die Glanzschleiermaßzahl g ist definiert als:

$$g = \frac{I_{43} - I_o}{I_o\ diff} \quad \text{mit}$$

$I_{43}$ = 45 ° Einstrahlung, Intensität bei 43 °
$I_o$ = 45 ° Einstrahlung, Intensität bei 0 °
$I_o$ diff = 45 ° Einstrahlung, Intensität bei 0° bei ideal diffuser Oberfläche

2) SKK = Schwitzwasser-Konstantklima nach DIN 50017

3) Die Lösemittelbeständigkeit der resultierenden Beschichtung wurde bestimmt, nachdem die Beschichtung durch 7-tägige Lagerung bei Raumtemperatur gehärtet worden war, indem mit Xylol bzw. Prüfkraftstoff nach DIN 51604 ("FAM") getränkte Filzplättchen (ø 5cm) für 5 min abgedeckt auf dem Film belassen werden. Anschließend wird die Markierung (0 = keine Markierung; 3 = deutliche Markierung) und die Erweichung des Films (0 = keine Erweichung; 3 = deutliche Erweichung) beurteilt.

Zur genaueren Bestimmung der Gebrauchseigenschaften (Topfzeiten) der Decklacke wurden weitere Proben der Decklacke der Beispiele 2, 5, V1 und V2 hergestellt und der Viskositätsanstieg dieser gebrauchsfertigen, den Katalysator enthaltenden Decklacke bei Lagerung bei Raumtemperatur untersucht. Die Ergebnisse sind in Tabelle 7 dargestellt.

Tabelle 7: Bestimmung der Auslaufzeiten im DIN4 Becher bei 23 °C der Decklacke der Beispiele 2, 5, V1 und V2 nach Lagerung der Decklacke bei Raumtemperatur

| Lagerzeit (h) | Auslaufzeit (s) der Decklacke | | | |
|---|---|---|---|---|
| | 2 | V1 | 5 | V2 |
| 0,0 | 17,0 | 16,5 | 17,0 | 17,0 |
| 0,5 | 18,0 | 19,5 | 18,0 | 18,0 |
| 1,0 | 18,0 | 23,0 | 19,0 | 19,0 |
| 1,5 | 18,5 | 28,5 | 19,0 | 20,0 |
| 2,0 | 19,0 | 39,0 | 20,0 | 22,0 |
| 2,5 | 20,0 | 55,0 | 20,5 | 25,0 |
| 3,5 | 21,0 | Gel. | 22,0 | 30,0 |
| 4,0 | 22,0 | | 23,0 | 35,0 |
| 5,0 | 23,5 | | 25,5 | 45,0 |
| **Topfzeit (h)** | > 5 | 1,5 | > 5 | 3,5 |

## Patentansprüche

1. Beschichtungszusammensetzung, enthaltend

A) 50 bis 90 Gew.-% eines oder mehrerer Hydroxylgruppen enthaltender Additionspolymerer, hergestellt durch Copolymerisation von ethylenisch ungesättigten Monomeren, welche zum Teil Hydroxilalkylester $\alpha,\beta$-ethylenisch ungesättigter Carbonsäuren sind,

B) 10 bis 50 Gew.-% eines oder mehrerer Melamin-Formaldehydvernetzungsmittels,

wobei die Summe der Gewichtsanteile von A und B 100 Gew.-% beträgt, sowie geeignete Hilfs- und Zusatzstoffe, ggf. Pigmente, ggf. Füllstoffe, organisches Lösungsmittel und einen Säurekatalysator, dadurch gekennzeichnet, daß als saure Katalysatoren

1) mindestens eine Hydroxylgruppe enthaltende Bernsteinsäurediestersulfonsäuren und/oder -sulfoniumsalze, die den nachfolgenden Formeln (I) oder (II) entsprechen:

$$R^1 - O - \overset{\overset{\displaystyle O}{\|}}{C} - CH_2 - \overset{\overset{\displaystyle SO_3Z}{|}}{CH} - \overset{\overset{\displaystyle O}{\|}}{C} - O - R^2 \qquad (I)$$

$$R^1 - O - \overset{\overset{O}{\|}}{C} - \overset{\overset{SO_3Z}{|}}{CH} - CH_2 - \overset{\overset{O}{\|}}{C} - O - R^2 \qquad (II)$$

wobei bedeuten:

$R^1$ = linearer oder verzweigter Alkyl- bzw. Alkoxyalkylrest mit 2 bis 12 C-Atomen und mit 1, 2 oder 3 Hydroxylgruppen

$R^2$ = linearer oder verzweigter Alkyl-bzw. Alkoxyalkylrest mit 2 bis 12 C-Atomen und ggf. bis zu 3 Hydroxylgruppen

Z = H, $NH_nR_{4-n}$
mit n = 0-4 und
R = Alkyl, Hydroxialkyl, Aryl, Hydroxiaryl, wobei R gleich oder verschieden sein kann,
oder
aliphatischer oder aromatischer N-Heterocyclus

und/oder

2) mindestens eine Hydroxylgruppen enthaltende Bernsteinsäurepolyestersulfonsäuren und/oder -sulfoniumsalze eingesetzt werden.

**2.** Verfahren zur Herstellung eines Beschichtungszusammensetzung,, enthaltend

A) 50-90 Gew.-% eines oder mehrerer Hydroxylgruppen enthaltenden Additionspolymeren, hergestellt durch Copolymerisation von ethylenisch ungesättigten Monomeren, welche zum Teil Hydroxialkylester α,β-ethylenisch ungesättigter Carbonsäuren sind,

B) 10 bis 50 Gew.-% eines oder mehrerer Melamin-Formaldehyd-Vernetzungsmittels, wobei die Summe der Gewichtsanteile von A und B 100 Gew.-% beträgt, sowie geeignete Hilfs- und Zusatzstoffe, ggf. Pigmente, ggf. Füllstoffe, organisches Lösungsmittel und einen Säurekatalysator, dadurch gekennzeichnet, daß als saure Katalysatoren

1) mindestens eine Hydroxylgruppe enthaltende Bernsteinsäurediestersulfonsäuren und/oder -sulfonium-salze, die den nachfolgenden Formeln (I) oder (II) entsprechen:

$$R^1 - O - \overset{O}{C} - CH_2 - \overset{SO_3Z}{CH} - \overset{O}{C} - O - R^2 \qquad (I)$$

$$R^1 - O - \overset{O}{C} - \overset{SO_3Z}{CH} - CH_2 - \overset{O}{C} - O - R^2 \qquad (II)$$

wobei bedeuten:

$R^1$ = linearer oder verzweigter Alkyl- bzw. Alkoxyalkylrest mit 2 bis 12 C-Atomen und mit 1, 2 oder 3 Hydroxylgruppen

$R^2$ = linearer oder verzweigter Alkyl- bzw. Alkoxyalkylrest mit 2 bis 12 C-Atomen und ggf. bis zu 3 Hydroxylgruppen

Z = H, $NH_nR_{4-n}$
mit n= 0-4 und
R = Alkyl, Hydroxialkyl, Aryl, Hydroxiaryl, wobei R gleich oder verschieden sein kann, oder
aliphatischer oder aromatischer N-Heterocyclus und/oder

2) mindestens eine Hydroxylgruppen enthaltende Bernsteinsäurepolyestersulfonsäuren und/oder -sulfoniumsalze eingesetzt werden und die Komponenten A und B mit dem Katalysator vermischt und zu einer Überzugmasse verarbeitet werden.

3. Beschichtungszusammensetzung oder Verfahren nach Anspruch 1 oder 2, dadurch gekennzeichnet, daß die als Katalysator eingesetzten Bernsteinsäureestersulfonsäuren und/oder - sulfoniumsalze hergestellt worden sind, indem
   1. Maleinsäureanhydrid mit einem Di- und/oder Polyol zum Maleinsäuremonoester umgesetzt wurde,
   2. der Maleinsäuremonoester aus 1. mit weiterem Di- und/oder Polyol bis zum Erreichen einer Säurezahl < 5 mg KOH/g, bevorzugt < 3 mg KOH/g, verestert wurde,
   3. der Maleinsäureester aus 2. durch Addition von Schwefeldioxid, Hydrogensulfiten oder Sulfiten an die C-C-Doppelbindung sulfoniert wurde und
   4. gegebenenfalls die entsprechende Bernsteinsäureestersulfonsäure durch Umsetzen mit einer starken Säure freigesetzt wurde.

4. Beschichtungszusammensetzung oder Verfahren nach einem der Ansprüche 1 bis 3, dadurch gekennzeichnet, daß der saure Katalysator in einem Anteil von mehr als 1 bis 10 Gew.-%, bevorzugt 2 bis 5 Gew.-%, bezogen auf den Bindemittelfestkörper, verwendet wird un daß der Katalysator bevorzugt in Form der freien Sulfonsäure eingesetzt wird.

5. Beschichtungszusammensetzung oder Verfahren nach einem der Ansprüche 1 bis 3, dadurch gekennzeichnet, daß der saure Katalysator in einem Anteil von 0,1 bis 2 Gew.-% bevorzugt 0,1 bis 1 Gew.-%, bezogen auf den Bindemittelfestkörper, verwendet wird.

6. Beschichtungszusammensetzung oder Verfahren nach einem der Ansprüche 1 bis 5, dadurch gekennzeichnet, daß als Veresterungsalkohol Trimethylolpropan, Propylenglykol und/oder Neopentylglykol verwendet werden.

7. Beschichtungszusammensetzung oder Verfahren nach einem der Ansprüche 1 bis 6, dadurch gekennzeichnet, daß die hydroxifunktionellen Katalysatoren zusammen mit nicht-hydroxifunktionellen organischen Sulfonsäuren verwendet werden, wobei der Anteil der nicht-hydroxifunktionellen organischen Sulfonsäuren nicht mehr als 50 Gew.-%, bezogen auf das Gesamtgewicht der Sulfonsäuren, beträgt.

8. Beschichtungszusammensetzung oder Verfahren nach einem der Ansprüche 1 bis 7, dadurch gekennzeichnet, daß zur Herstellung des Hydroxylgruppen enthaltenden Additions-polymeren A ein Hydroxialkylester verwendet wird, der ausgewählt ist aus der Gruppe 2-Hydroxiethylacrylat, 2-Hydroxiethylmethacrylat, Hydroxipropylacrylat, Hydroxipropylmethacrylat, 4-Hydroxibutylmethacrylat und 4-Hydroxibutylacrylat.

9. Beschichtungszusammensetzung oder Verfahren nach einem der Ansprüche 1 bis 8, dadurch gekennzeichnet, daß die Komponente A erhältlich ist durch Copolymerisation von
   $a_1$) 10 bis 60 Gew.-% hydroxylgruppenhaltigen Estern der Acrylsäure und/oder Methacrylsäure mit 2 bis 14 Kohlenstoffatomen im Alkylrest,
   $a_2$) mehr als 3 bis 30 Gew.-%; bevorzugt 5 bis 25 Gew.-% ethylenisch ungesättigten Monomeren mit mindestens 2 polymerisierbaren Doppelbindungen und
   $a_3$) 15 bis 82 Gew.-% weiteren polymerisierbaren Monomeren mit einer olefinisch ungesättigten Doppelbindung,

   wobei die Summe der Gewichtsanteile von $a_1$, $a_2$ und $a_3$ 100 Gew.-% beträgt.

10. Beschichtungszusammensetzung oder Verfahren nach einem der Ansprüche 1 bis 9, dadurch gekennzeichnet, daß zum Teil als Hydroxilalkylester $\alpha,\beta$-ethylenisch ungesättigter Carbonsäuren Umsetzungsprodukte von Acrylsäure und/oder Methycrylsäure mit dem Glydicylester einer Carbonsäure mit einem tertiären $\alpha$-Kohlenstoffatom oder von dem Glycidylester einer $\alpha,\beta$-ethylenisch ungesättigten Carbonsäure mit einer teriären aliphatischen Carbonsäure verwendet werden.

11. Beschichtungszusammensetzung oder Verfahren nach einem der Ansprüche 1 bis 10, dadurch gekennzeichnet, daß zum Teil als Hydroxialkylester $\alpha,\beta$-ethylenisch ungesättigter Carbonsäuren Umsetzungsprodukte aus einem Mol Hydroxiethylacrylat und/oder Hydroxiethylmethacrylat mit durchschnittlich 2 Molen $\varepsilon$ -Caprolacton verwendet werden.

12. Beschichtungszusammensetzung oder Verfahren nach einem der Ansprüche 1 bis 11, dadurch gekennzeichnet, daß als Aminoplastharze B, Melamin-Formaldehyd-Harze verwendet werden.

13. Beschichtungszusammensetzung oder Verfahren nach Anspruch 12, dadurch gekennzeichnet, daß als Komponente B Hexamethoxymethylmelamin verwendet wird.

14. Verwendung der Beschichtungszusammensetzung nach Anspruch 1, 3, 4 und 6 bis 13 für die Autoreparaturlackierung.

15. Verwendung der Beschichtungszusammensetzung nach Anspruch 1, 3 und 5 bis 13 als Einbrennlack.

## Claims

1. A coating composition, containing
A) 50 to 90% by weight of one or more hydroxyl-containing addition polymers, prepared by copolymerization of ethylenically unsaturated monomers which are in part hydroxyalkyl esters of α,β-ethylenically unsaturated carboxylic acids and
B)10 to 50% by weight of one or more melamineformaldehyde cross linking agents
the sum of the proportions by weight of A and B being 100% by weight, and suitable auxiliaries and additives, optionally pigments, optionally fillers, organic solvent and an acid catalyst, wherein the acid catalyst used comprises
1) a sulfo- or sulfonio[sic]-succinic diester which contains at least one hydroxyl group and correspond to the following formulae (I) or (II):

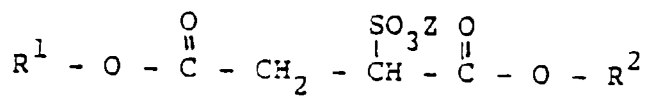

(I)

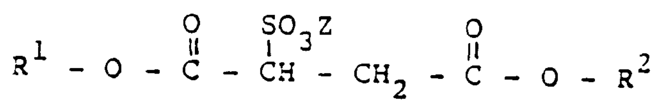

(II)

in which:
$R^1$= a linear or branched alkyl or alkoxyalkyl radical having 2 to 12 carbon atoms and having I, 2 or 3 hydroxyl groups
$R^2$= a linear or branched alkyl or alkoxyalkyl radical having 2 to 12 carbon atoms and, if desired, up to 3 hydroxyl groups
Z = H or $NH_nR_{4-n}$
with n = 0-4 and
R = alkyl, hydroxyalkyl, aryl or hydroxyaryl, where R may be identical or different, or an aliphatic or aromatic N-heterocycle
and/or
2) a succinic polyester sulfonic acid and/or succinic polyester sulfonium salt in each case containing at least one hydroxyl group.

2. A process for the preparation of a coating composition containing
A) 50 to 90% by weight of one or more hydroxyl-containing addition polymers, prepared by copolymerization of ethylenically unsaturated monomers which are in part hydroxyalkyl esters of (α,β-ethylenically unsaturated carboxylic acids and
B) 10 to 50% by weight of one or more melamine-formaldehyde crosslinking agents
the sum of the proportions by weight of A and B being 100% by weight, and suitable auxiliaries and additives, optionally pigments, optionally fillers, organic solvent and an acid catalyst, which comprises using an acid catalyst which contains
I) a sulfo- or sulfonio[sic]-succinic diester which contains at least one hydroxyl group and corresponds

to the following formulae (I) or (II):

$$R^1 - O - \overset{O}{C} - CH_2 - \overset{SO_3Z}{CH} - \overset{O}{C} - O - R^2 \qquad (I)$$

$$R^1 - O - \overset{O}{C} - \overset{SO_3Z}{CH} - CH_2 - \overset{O}{C} - O - R^2 \qquad (II)$$

in which:

$R^1$ = a linear or branched alkyl or alkoxyalkyl radical having 2 to 12 carbon atoms and having 1, 2 or 3 hydroxyl groups

$R^2$ = a linear or branched alkyl or alkoxyalkyl radical having 2 to 12 carbon atoms and, if desired, up to 3 hydroxyl groups

Z = H or $NH_nR_{4-n}$
with n = 0-4 and

R = alkyl, hydroxyalkyl, aryl or hydroxy aryl, where R may be identical or different, or an aliphatic or aromatic N-heterocycle

and/or

2) a sulfo- or sulfonio[sic]-succinic polyester which contains at least one hydroxyl group, and mixing components A and B with the catalyst and processing the mixture to form a coating composition.

**3.** The coating composition or the process as claimed in claim 1 or 2, wherein the sulfo- or sulfonio[sic]-succinic ester used as catalyst has been prepared by

1. reacting maleic anhydride with a diol and/or polyol to form the maleic monoester,
2. esterifying the maleic monoester from 1. with more diol and/or polyol until an acid number of < 5 mg of KOH/g, preferably of < 3 mg of KOH/g, has been reached,
3. sulfonating the maleic ester from 2. by adding sulfur dioxide, a hydrogen sulfite or a sulfite to the C-C double bond and
4. if desired, liberating the corresponding sulfosuccinic ester by reaction with a strong acid.

**4.** The coating composition or the process as claimed in one of claims 1 to 3, wherein the acid catalyst is used in a proportion of more than 1 and up to 10% by weight, preferably 2 to 5% by weight, relative to the binder solids, and the catalyst is preferably used in the form of the free sulfonic acid.

**5.** The coating composition or the process as claimed in one of claims I to 3, wherein the acid catalyst is used in a proportion of 0.1 to 2% by weight, preferably 0.1 to 1% by weight, relative to the binder solids.

**6.** The coating composition or the process as claimed in one of claims 1 to 5, wherein the esterifying alcohol used is trimethylolpropane, propylene glycol and/or neopentyl glycol.

**7.** The coating composition or the process as claimed in one of claims I to 6, wherein the hydroxy-functional catalyst is used together with a non-hydroxy-functional organic sulfonic acid, the proportion of non-hydroxy-functional organic sulfonic acid being not more than 50% by weight, relative to the total weight of sulfonic acid.

**8.** The coating composition or the process as claimed in one of claims I to 7, wherein in order to prepare the hydroxyl-containing addition polymer A, a hydroxyalkyl ester is used which is selected from the group comprising 2-hydroxyethyl acrylate, 2-hydroxyethyl methacrylate, hydroxypropyl acrylate, hydroxypropyi methacrylate, 4-hydroxybutyl methacrylate and 4-hydroxybutyl acrylate.

**9.** The coating composition or the process as claimed in one of claims 1 to 8, wherein the component A can be obtained by copolymerization of

$a_1$) 10 to 60% by weight of hydroxyl-containing esters of acrylic acid and/or methacrylic acid having 2

to 14 carbon atoms in the alkyl radical,

$a_2$) more than 3 and up to 30% by weight, preferably 5 to 25% by weight, of ethylenically unsaturated monomers having at least 2 polymerizable double bonds and

$a_3$) 15 to 82% by weight of other polymerizable monomers having one olefinically unsaturated double bond,

the sum of the proportions by weight of $a_1$, $a_2$and $a_3$ being 100% by weight.

**10.** The coating composition or the process as claimed in one of claims 1 to 9, wherein in part the hydroxyalkyl ester of α,β-ethylenically unsaturated carboxylic acid which is used is a reaction product of acrylic acid and/or methacrylic acid with the glycidyl ester of a carboxylic acid having a tertiary α-carbon atom or of the glycidyl ester of an α,β-ethylenically unsaturated carboxylic acid with a tertiary aliphatic carboxylic acid.

**11.** The coating composition or the process as claimed in one of claims I to 10, wherein in part the hydroxyalkyl ester of α,β-ethylenically unsaturated carboxylic acid which is used is a reaction product of one mole of hydroxyethyl acrylate and/or hydroxyethyl methacrylate with an average of 2 moles of α-caprolactone.

**12.** The coating composition or the process as claimed in one of claims 1 to 11, wherein the amino resin B which is used is a melamine-formaldehyde resin.

**13.** The coating composition or the process as claimed in claim 12 wherein the component B which is used is hexamethoxymethylmelamine.

**14.** The use of the coating composition as claimed in claim I, 3, 4 and 6 to 13 for automobile repair finishing.

**15.** The use of the coating composition as claimed in claim I, 3 and 5 to 13 as a stoving paint.

## Revendications

**1.** Composition de revêtement, contenant

A) de 50 à 90 % en poids d'un ou plusieurs polymères d'addition contenant des groupes hydroxyle, préparés par copolymérisation de monomères à insaturation éthylénique, qui sont, pour une part, des esters hydoxyalkyliques d'acides carboxyliques à insaturation α ,β-éthylénique,

B) de 10 à 50 % en poids d'un ou plusieurs agents de réticulation mélamine-formaldéhyde,

la somme des parties en poids de A et de B étant de 100 % en poids, ainsi que des adjuvants et additifs, le cas échéants des pigments, le cas échéant des charges, un solvant organique et un catalyseur acide, caractérisée en ce qu'on utilise comme catalyseurs acides

1) des acides sulfoniques et/ou sels de sulfonium de diesters de l'acide succinique contenant au moins un groupe hydroxyle, qui répondent aux formules (I) ou (II) suivantes :

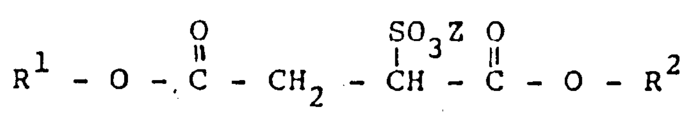 (I)

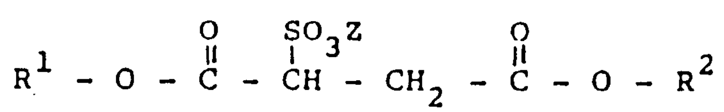 (II)

dans laquelle

$R^1$ représente un radical alkyle ou alcoxyalkyle linéaire ou ramifié en $C_2$-$C_{12}$ ayant 1, 2 ou 3 groupes hydroxyle,

$R^2$ est un radical alkyle ou alcoxy linéaire ou ramifié en $C_2$-$C_{12}$ et ayant, le cas échéant jusqu'à 3 groupes hydroxyle,

Z est H, $NH_nR_{4-n}$

où n est un nombre de 0 à 4 et

R peut être un groupe alkyle, hydroxyalkyle, aryle, hydroxyaryle, les R pouvant être identiques

ou différents,

ou

un hétérocycle azoté aliphatique ou aromatique

et/ou

2) des acides sulfoniques et/ou sels de sulfonium de polyesters de l'acide succinique contenant au moins un groupe hydroxyle.

**2.** Procédé de préparation d'une composition de revêtement, contenant

A) 50 à 90 % en poids d'un polymère d'addition contenant un ou plusieurs groupes hydroxyle, préparé par copolymérisation de monomères à insaturation éthylénique, qui sont, pour une part, des esters hydroxyalkyliques d'acides carboxyliques à insaturation $\alpha$,$\beta$-éthylénique,

B) 10 à 50 % en poids d'un ou plusieurs agents de réticulation mélamine-formaldéhyde,

la somme des proportions pondérales de A et de B étant de 100 % en poids, ainsi que des adjuvants et additifs appropriés, le cas échéant des pigments, le cas échéant des charges, un solvant organique et un catalyseur acide, caractérisé en ce qu'on utilise comme catalyseur acide

1) des acides sulfoniques et/ou sels de sulfonium de diester de l'acide succinique contenant au moins un groupe hydroxyle, qui répondent aux formules (I) ou (II) suivantes :

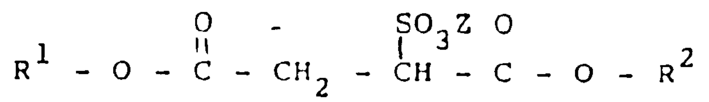

(I)

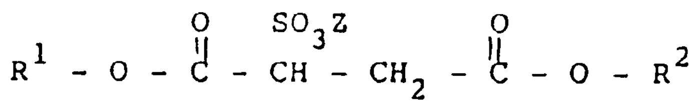

(II)

dans lesquelles :

$R^1$ représente un radical alkyle ou alcoxyalkyle linéaire ou ramifié en $C_2$ -$C_{12}$, portant 1, 2 ou 3 groupes hydroxyle,

$R^2$ désigne un radical alkyle ou alcoxyalkyle linéaire ou ramifié en $C_2$ -$C_{12}$, portant, le cas échéant, jusqu'à 3 groupes hydroxyle

Z est H, $NH_nR_{4-n}$

où n est un nombre de 0 à 4 et

R est un groupe alkyle, hydroxyalkyle, aryle, hydroxyaryle, les R pouvant être identiques ou différents,

ou

un hétérocycle azoté aliphatique ou aromatique,

et/ou

2) des acides sulfoniques et/ou sels de sulfonium de polyesters de l'acide succinique contenant au moins un groupe hydroxyle, et les constituants A et B sont mélangés avec le catalyseur et transformés en une masse de revêtement.

**3.** Composition ou procédé de revêtement selon la revendication 1 ou 2, caractérisé en ce que les acides sulfoniques et/ou sels de sulfonium d'esters de l'acide succinique utilisés comme catalyseurs ont été préparés

1. en faisant réagir l'anhydride maléique avec un di- et/ou polyol pour donner un monoester de l'acide maléique,
2. le monoester de l'acide maléique de 1 a été estérifié avec un autre di-et/ou polyol jusqu'à obtention d'un indice d'acide inférieur à 5 mg de KOH/g, de préférence inférieur à 3 mg de KOH/g,
3. l'ester maléique de 2 a été sulfoné par addition de dioxyde de soufre, de bisulfites ou de sulfites sur la double liaison C-C, et
4. l'acide sulfonique de diester de l'acide succinique correspondant a été libéré par réaction avec un acide fort.

**4.** Composition ou procédé de revêtement selon l'une des revendications 1 à 3, caractérisé en ce que le catalyseur acide est utilisé dans une proportion supérieure à 1-10 % en poids, de préférence à 2-5 % en poids par rapport aux matières solides du liant, et en ce que le catalyseur est utilisé de préférence sous la forme de l'acide sulfonique libre.

**5.** Composition ou procédé de revêtement selon l'une des revendications 1 à 3, caractérisé en ce que le catalyseur acide est utilisé dans une proportion de 0,1 à 2 % en poids, de préférence de 0,1 à 1 % en poids, par rapport aux matières solides du liant.

**6.** Composition ou procédé de revêtement selon l'une des revendications 1 à 5, caractérisé en ce qu'on utilise come alcool d'estérification du triméthylolpropane, du propylèneglycol et/ou du néopentylglycol.

**7.** Composition ou procédé de revêtement selon l'une des revendications 1 à 6, caractérisé en ce que les catalyseurs à fonction hydroxy sont utilisés en même temps que des acides sulfoniques organiques ne comportant pas de fonction hydroxy, la proportion des acides organiques ne comportant pas de fonction hydroxy ne dépassant pas 50 % en poids par rapport au poids total des acides sulfoniques.

**8.** Composition ou procédé de revêtement selon l'une des revendications 1 à 7, caractérisé en ce qu'on utilise pour la préparation du polymère A contenant des groupes hydroxyle un ester d'hydroxyalkyle qui est choisi parmi l'acrylate de 2-hydroxyéthyle, le méthacrylate de 2-hydroxyéthyle, l'acrylate d'hydroxypropyle, le méthacrylate d'hydroxypropyle, le méthacrylate de 4-hydroxybutyle et l'acrylate de 4-hydroxybutyle.

**9.** Composition ou procédé de revêtement selon l'une des revendications 1 à 8, caractérisé en ce que le constituant A peut être obtenu par copolymérisation

$a_1$) de 10 à 60 % en poids d'esters de l'acide acrylique et/ou de l'acide méthacrylique contenant des groupes hydroxyle ayant 2 à 14 atomes de carbone dans le radical alkyle,

$a_2$) plus de 3 à 30 % en poids, de préférence 5 à 25 % en poids de monomères à insaturation éthylénique ayant au moins deux doubles liaisons polymérisables, et

$a_3$) 15 à 82 % en poids d'autres monomères polymérisables ayant une double liaison à insaturation oléfinique,

la somme des proportions pondérales de $a_1$, $a_2$ et $a_3$ étant de 100 % en poids.

**10.** Composition ou procédé de revêtement selon l'une des revendications 1 à 9, caractérisé en ce qu'on utilise, pour une part, comme ester hydroxyalkylique d'acides carboxyliques à insaturation $\alpha,\beta$ -éthylénique des produits de réaction de l'acide acrylique et/ou de l'acide méthacrylique avec l'ester glycidylique d'un acide carboxylique ayant un atome de carbone $\alpha$ tertiaire ou de l'ester glycidylique d'un acide carboxylique à insaturation $\alpha,\beta$-éthylénique avec un acide carboxylique aliphatique tertiaire.

**11.** Composition ou procédé de revêtement selon l'une des revendications 1 à 10, caractérisé en ce qu'on utilise, pour une part, comme ester hydroxyalkylique d'acides carboxyliques à insaturation $\alpha,\beta$-éthylénique des produits de réaction d'une mole d'acrylate d'hydroxyéthyle et/ou de méthacrylate d'hydroxyéthyle avec en moyenne 2 moles d'$\varepsilon$-caprolactone.

**12.** Composition ou procédé de revêtement selon l'une des revendications 1 à 11, caractérisé en ce qu'on utilise, comme résines aminoplastes B, des résines mélamine-formaldéhyde .

**13.** Composition ou procédé de revêtement selon la revendication 12, caractérisé en ce qu'on utilise comme constituant B de l'hexaméthoxyméthylmélanine.

**14.** Utilisation de la composition de revêtement selon les revendications 1, 3, 4 et 6 à 13 pour le laquage en réparation automobile.

**15.** Utilisation de la composition de revêtement selon les revendications 1, 3 et 5 à 13 comme vernis à cuire.